# EUROPÄISCHE PATENTSCHRIFT

(11) **EP 0 873 365 B1**
(45) Veröffentlichungstag und Bekanntmachung des Hinweises auf die Patenterteilung: **13.06.2001**
(21) Anmeldenummer: 97908113.0
(22) Anmeldetag: 09.01.1997
(51) Int. Cl.: C08B 15/06

(54) **NEUE AROMATISCHE AMIN-CELLULOSEDERIVATE UND VERFAHREN ZU DEREN HERSTELLUNG**
NEW AROMATIC AMINO-CELLULOSE DERIVATIVES AND PROCESS FOR THEIR PREPARATION
NOUVEAUX DERIVES AMINOCELLULOSIQUES AROMATIQUES ET PROCEDE DE PRODUCTION ASSOCIE

(30) Priorität: 12.01.1996 DE 19600929
(43) Veröffentlichungstag der Anmeldung: 28.10.1998
(73) Patentinhaber: FORSCHUNGSZENTRUM JÜLICH GMBH, 52425 Jülich (DE)
(72) Erfinder: BERLIN, Peter, D-52428 Jülich (DE); TILLER, Jörg, D-07749 Jena (DE); KLEMM, Dieter, D-99425 Weimar (DE)
(86) Internationale Anmeldenummer: DE9700070
(87) Internationale Veröffentlichungsnummer: WO9725353

(56) Entgegenhaltungen:
- DD-A- 296 934
- DE-C- 473 097
- US-A- 2 241 542

## Beschreibung

Die Erfindung betrifft ein Verfahren zur Herstellung von aromatischen Amin-Cellulosederivaten gemäß den Ansprüchen 1 bis 10 sowie neue aromatische Amin-Cellulosederivate gemäß den Ansprüchen 11 bis 13.

Unter den zahlreich bekannten Cellulosederivaten sind auch solche mit aromatischen NH₂-Gruppierungen beschrieben, wie beispielsweise 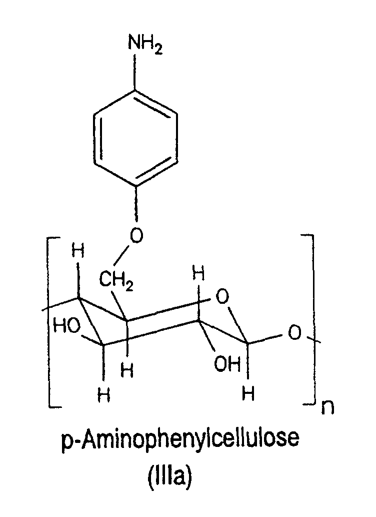 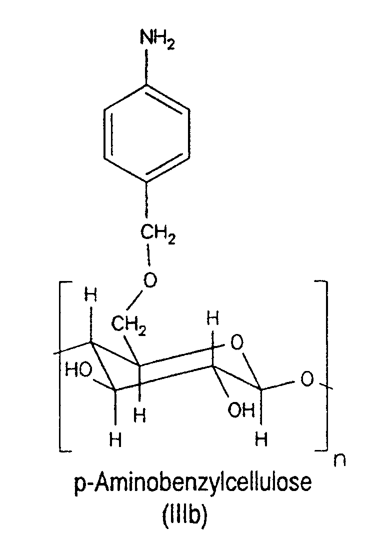 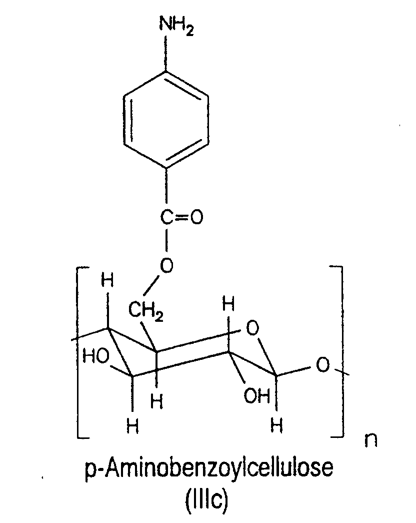 Das Cellulosederivat p-Aminophenylcellulose der allgemeinen Formel IIIa und dessen Herstellung ist in der Patentschrift CS 221024 beschrieben. Die Verbindung p-Aminobenzylcellulose der allgemeinen Formel IIIb und dessen Herstellung ist beispielsweise aus der Veröffentlichung von Braun, D und Meuret, B. (1989), Das Papier 43, 688-694, und die Verbindung p-Aminobenzoylcellulose der allgemeinen Formel IIIc sowie dessen Synthese aus der Patentschrift JP 01249801 bekannt. Diese Cellulosederivate sind insbesondere für die Anwendung als Trägermatrix für Bioverbindungen, wie Enzyme oder Antikörper, geeignet: Für das Derivat p-Aminobenzylcellulose ist diese Anwendung z.B. von Ohba, R., Shibata, T. und Ueda, S. (1979) in J. Ferment. Technol. 57, 146-150 und für p-Aminobenzoylcellulose z.B. von Dumitriu, S. und Popa, M.I. (1985) in Cellul. Chem. Technol. 19, 609-613 beschrieben. Allerdings sind die Synthesen der genannten Derivate sehr aufwendig. Darüber hinaus erweisen sich die Syntheseprodukte als uneinheitlich, da sie über einen Reduktions-Reaktionsschritt aus dem entsprechenden p-Nitro-Derivat erhalten werden.

Des weiteren sind aus der Literatur p-Phenylendiamin-Cellulosederivate folgender Strukturen bekannt: 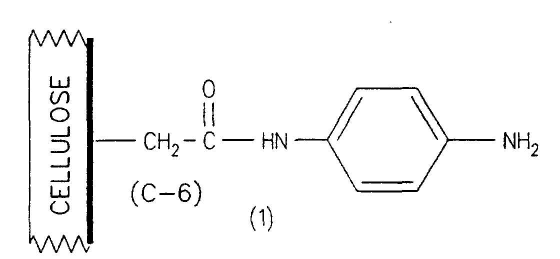 (Vgl. z.B. Simionescu, C. und Dumitriu, S. (1983), Polym. Sci. Technol. (Plenum) 23, (Polym. Med.), 115-137) 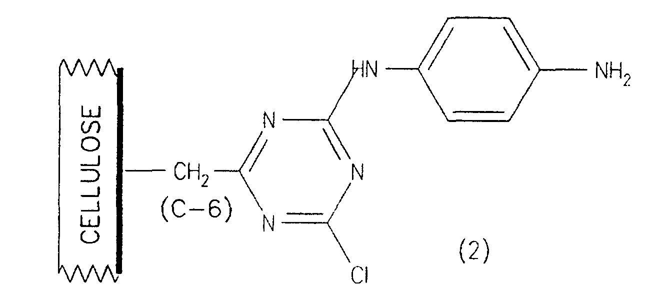 (Vgl. Hebeish, A. und Waly, A. (1978), J. Appl. Polym. Sci. 22, 2713-2716) 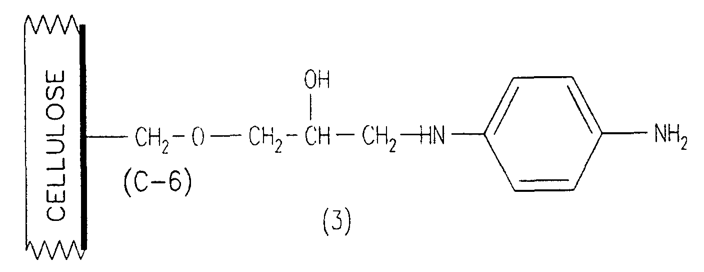 (Vgl. Patentschrift CS 223256) 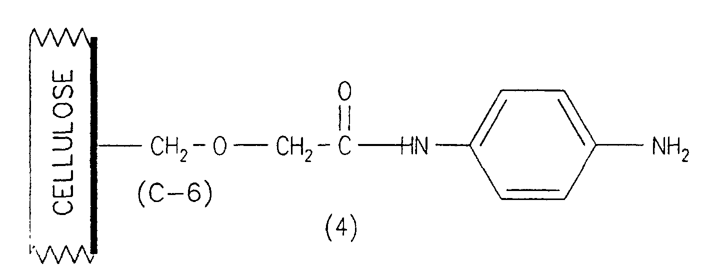 (Vgl. Beddows, C.G. (1980). Biotechnol. Bioeng. 22, 311-321)

Entsprechend sind auch Verfahren zur Herstellung dieser Cellulosederivate bekannt, wobei auch die Eignung derart synthetisierter Derivate als Trägermatrix beschrieben ist (vgl. z.B. Simionescu, C. et al. (1984), Acta Polym. 35, 536-609). Aber auch die Synthese dieser Cellulosederivate ist sehr aufwendig: So erfolgen Umsetzungen entsprechender p-Nitro-Verbindungen mit Cellulosederivaten über mehrere Reaktionsschritte, beispielsweise unter Anwendung reaktiver bifunktioneller Reagenzien, wie z.B. Epichlorhydrin oder Cyanurchlorid (vgl. z.B. Patentschrift CS 223256 oder Hebeish, A. und Waly, A. (1978), J. Appl. Polym. Sci. 22, 2713-2716). Ein entscheidender Nachteil ist, daß die aufwendigen Synthesewege einen Reduktions-Reaktionsschritt entsprechender p-Nitro-Zwischenprodukte erfordern, was häufig zu uneinheitlichen Reaktionsprodukten führt. Des weiteren haben die beschriebenen Cellulosederivate die unvorteilhaften Eigenschaften, meist unlöslich zu sein, und sie sind, vergleichsweise zum freien p-Phenylendiamin, weniger reaktiv, z.B. nicht redoxaktiv.

Aus DE-PS 473 097 sind Amincellulosederivate bekannt, an die Farbstoffe durch ionische Bindung angekoppelt werden können, was zu einer Färbung führt. Die Amincellulosederivate werden hergestellt, indem sich von organisch substituierten anorganischen Säuren ableitende Ester der Cellulose mit Säurechloriden oder Säureanhydriden in Gegenwart tertiärer aliphatischer Anide umgesetzt oder sie versetzt oder verestert und mit primären, sekundären oder tertiären aliphatischen, aromatischen oder araliphatischen Aminen behandelt werden.

Die DD 296 934 A5 offenbart ein Verfahren zur Herstellung von Cellulosematrizen für die hydrophobe Chromatographie. Die Einführung hydrophober Gruppen erfolgt durch die Umsetzung tosylierter Cellulose mit nukleophilen Verbindungen, insbesondere Arylaminen.

Die US 2,241,542 zeigt ein Verfahren zur Herstellung von Cellulosederivaten, an die Farbstoffmoleküle anbinden können. Die zur Ankopplung herangezogenen funktionellen Gruppen sind aliphatische Di- oder Tri-Amine.

Es ist Aufgabe der Erfindung, ein einfaches Verfahren zur Herstellung von aromatischen Amin-Cellulosederivaten bereitzustellen. Es ist ferner Aufgabe der Erfindung, entsprechende Cellulosederivate bereitzustellen, die eine Redox-Reaktivität, z.B. eine oxidative Kupplungsaktivität, aufweisen.

Diese Aufgabe wird erfindungsgemäß dadurch gelöst, daß ein aromatisches Amin mit Tosyl-(=Toluolsulfonyl-) oder Tresylcellulose der allgemeinen Formel I 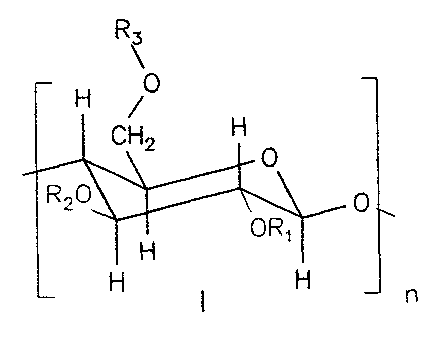 in der R₁, R₂ = H
oder R₁ = H, R₂ = Substituent mit einem Substitutionsgrad ≤ 1
oder R₁ = Substituent mit einem Substitutionsgrad ≤ 1, R₂ = H
oder R₁, R₂ = Substituent mit einem Substitutionsgrad ≤ 2
und R₃ ein Tosyl- oder Tresylrest mit einem Substitutionsgrad ≤ 1
bedeutet, umgesetzt wird.

Es zeigte sich überraschenderweise, daß sich entsprechende Cellulosederivate durch die erfindungsgemäße Umsetzung in nur einem einzigen Syntheseschritt herstellen lassen. Dabei werden die am C-6 des Grundgerüstes der Cellulose (bei R₁, R₂ = H) bzw. des Cellulosederivats (bei R₁ und/oder R₂ = Substituent) befindlichen Tosyl- oder Tresylreste (R₃) direkt durch das aromatische Amin ersetzt. Der am C-6 des Grundgerüstes befindliche Rest R₃ kann ausschließlich ein Tosyl- oder Tresylrest sein, oder aber es können in der R₃-Position innerhalb eines Makromoleküls auch beide Reste vertreten sein.

In dem erfindungsgemäßen Verfahren wird als aromatisches Amin vorzugsweise ein Diamin, insbesondere ein Phenylendiamin bzw. 1,4-Phenylendiamin, eingesetzt. Es können aber auch als Amine beispielsweise Verbindungen mit den folgenden Strukturformeln eingesetzt werden: 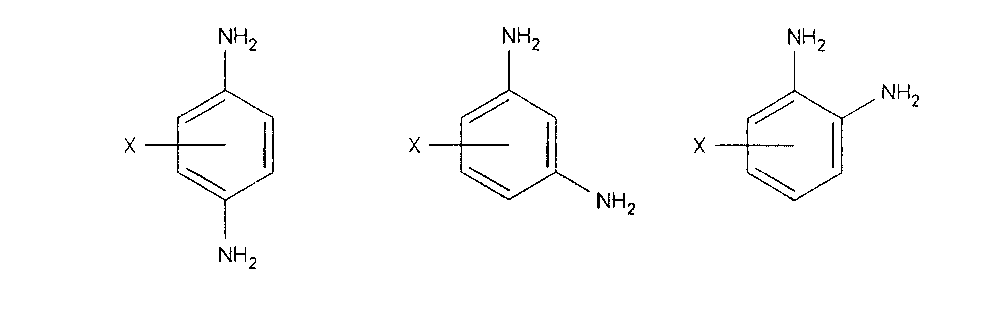 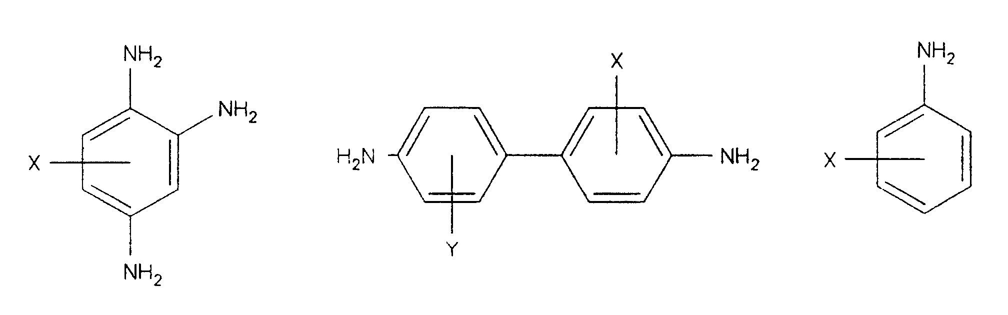
X = H oder H und/oder Substituenten
Y = H oder H und/oder Substituenten

Für die Umsetzung kommen vorzugsweise solche Tosyl-bzw. Tresylcellulosederivate zum Einsatz, bei denen der Substituent in der R₁- und/oder R₂-Position des Grundgerüstes ein Alkyl, vorzugsweise CH₃, oder ein Acyl, vorzugsweise Acetyl, oder ein (weiterer) Tosyl- oder Tresylrest ist. Dabei kann auch hier der Substituent in der R₁- und/oder R₂-Position ausschließlich ein Substituent der genannten Art sein, oder es können in der R₁-und/oder R₂-Position innerhalb eines Makromoleküls auch unterschiedliche Substituenten der genannten Art vertreten sein.

Die erfindungsgemäße Synthese erfolgt in einem bekanntermaßen geeigneten Lösungsmittel, wie Dimethylformamid oder Dimethylacetamid, vorzugsweise in Dimethylsulfoxid (DMSO). Die Reaktion kann in Gegenwart einer organischen Base durchgeführt werden, wobei sich als Base vorzugsweise Pyridin oder Triethylamin eignet. Bei Verwendung von Triethylamin werden vorzugsweise 0,15 Gew.-Anteile dieser Base für die erfindungsgemäße Synthese eingesetzt, wobei eine Triethylaminschicht das Reaktionsgemisch abdeckt. Die Wahl der Reaktionstemperatur und der Zeitdauer richtet sich nach der Wahl der weiteren Reaktionsbedingungen: Wird beispielsweise die Reaktion ohne Basenzusatz durchgeführt, eignet sich für die erfindungsgemäße Umsetzung insbesondere eine Temperatur von 100°C und eine Zeitdauer von 5 Stunden; erfolgt die Umsetzung dagegen mit Triethylamin, reicht bei einer Temperatur von 100°C eine Reaktionszeit von 3 Stunden. Insgesamt haben Optimierungsversuche ergeben, daß eine optimale Umsetzung bei einer Temperatur von 80°C bis 120°C über eine Zeitdauer von 1 bis 10 Stunden erfolgt.

Durch das erfindungsgemäße Verfahren sind aromatische Amin-Cellulosederivate der folgenden allgemeinen Formel II herstellbar: 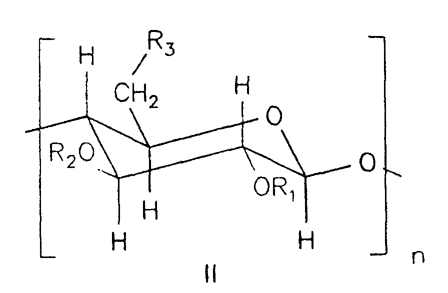 in der R₁, R₂ = H
oder R₁ = H, R₂ = Substituent mit einem Substitutionsgrad ≤ 1
oder R₁ = Substituent mit einem Substitutionsgrad ≤ 1, R₂ = H
oder R₁, R₂ = Substituent mit einem Substitutionsgrad ≤ 2
und R₃ ein aromatischer Aminrest mit einem Substitutionsgrad ≤ 1
bedeutet.

Der aromatische Aminrest in der R₃-Position ist vorzugsweise ein aromatischer Diaminrest, insbesondere ein Phenylen- bzw. 1,4-Phenylendiaminrest der Formel:

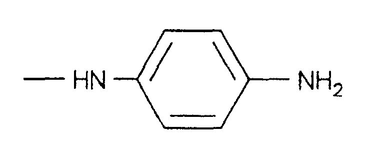

Als aromatischer Aminrest kann in der R₃-Position aber auch der Rest einer der Verbindungen mit den weiter oben gezeigten Strukturformeln vertreten sein.

In Fällen, in denen ein Cellulosederivat-Grundgerüst vorliegt, ist der Substituent in R₁- und/oder R₂-Position ein Alkyl, vorzugs-weise CH₃, oder Acyl, vorzugsweise Acetyl, oder ein Tosylrest oder ein Tresylrest. Dabei kann - wie bereits oben ausgeführt - der Substituent nur ein einziger der genannten Art sein, oder es können in der R₁- und/oder R₂-Position innerhalb eines Makromoleküls auch unterschiedliche Substituenten der genannten Art vertreten sein.

Die erfindungsgemäßen Derivate sind löslich, redoxaktiv, haben überraschenderweise chromogene Eigenschaften und eignen sich hervorragend zur Verwendung als Trägermatrix.

Ausführungsbeispiele:

### Synthese-Beispiel 1

Ein Gemisch aus 0,5 g Tosylcellulose (DS = 2,3) und 1 g p-Phenylendiamin wird in 5 ml DMSO gelöst und die Lösung mit 2,5 ml Triethylamin versetzt. Das Reaktionsgemisch wird bei einer Temperatur von 100°C und für eine Zeitdauer von 3 Stunden zeitweise stark gerührt und in den Rührpausen stehengelassen. Bei Stehen des Reaktionsgemisches bildet sich eine Überschichtung von überschüssigem Triethylamin, das das Gemisch vor Autoxidation schützt. Gegen Ende der Reaktionszeit nimmt die klare Lösung eine bräunliche Färbung an. Nach Abkühlung des Gemisches wird das weiß-gefärbte Reaktionsprodukt in Äthanol ausgefällt, abzentrifugiert und ca. 5mal mit Äthanol gewaschen. Der Feststoff ist in frisch gefälltem Zustand in THF, DMSO oder DMAC löslich. Für die Weiterverarbeitung werden vorzugsweise DMAC-Lösungen des p-Phenylendiamin-Cellulosederivates eingesetzt.

### Synthese-Beispiel 2

Ein Gemisch aus 100 mg Tosylcellulose (DS = 2,3) und 150 mg p-Phenylendiamin wird in 1 ml DMSO gelöst und die Lösung unter Rühren auf 100°C erhitzt. Im Verlauf einer Reaktionszeit von 8 Stunden ist das Gemisch dunkelbraun-gefärbt. Nach Abkühlung des Reaktionsansatzes wird ein schwach gefärbtes Reaktionsprodukt aus Äthanol ausgefällt.
Der Festsoff wird abzentrifugiert, mit Äthanol ca. 5mal gewaschen und anschließend in DMAC gelöst.

### Synthese-Beispiel 3

Ein Gemisch aus 200 ml 2,3-di-Methyl-6-tosylcellulose und 300 mg p-Phenylendiamin wird in DMAC gelöst und die Lösung mit 1 ml Triethylamin versetzt. Das Reaktionsgemisch wird für eine Zeitdauer von insgesamt 3 Stunden bei einer Temperatur von zunächst 80°C und zuletzt für ca. 30 Minuten bei 100°C stehengelassen. Danach wird das braungefärbte Reaktionsgemisch auf Raumtemperatur abgekühlt und ein schwach gefärbter Feststoff in Äthanol ausgefällt. Der Feststoff wird abzentrifugiert, ca. 5mal mit Äthanol gewaschen und anschließend in DMAC gelöst.

### Synthese-Beispiel 4

Ein Gemisch aus 300 mg Tosylcellulose (DS = 2,0) und 300 mg p-Phenylendiamin wird in 2 ml DMSO gelöst und die Lösung mit 500 µl Pyridin versetzt. Das Reaktionsgemisch wird für eine Zeitdauer von 3 Stunden auf 80°C erhitzt und anschließend für 30 Minuten bei ca. 120°C stehengelassen. Nach Abkühlen des Reaktionsansatzes auf Raumtemperatur wird ein braun-gefärbtes Reaktionsprodukt in Äthanol ausgefällt, abzentrifugiert und der bräunliche Feststoff ca. 5mal mit Äthanol gewaschen. Anschließend wird der Feststoff in DMAC gelöst.

## Patentansprüche

1. Verfahren zur Herstellung von aromatischen Di-oder Triamin-Cellulosederivaten, bei dem ein aromatisches Di- oder Triamin mit Tosyl- oder Tresylcellulose der allgemeinen Formel I 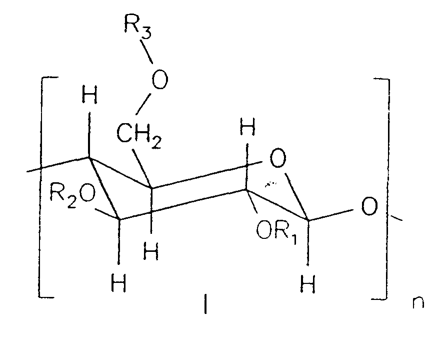 in der R₁, R₂ = H
oder R₁ = H, R₂ = Substituent mit einem Substitutionsgrad ≤ 1
oder R₁ = Substituent mit einem Substitutionsgrad ≤ 1, R₂ = H
oder R₁, R₂ = Substituent mit einem Substitutionsgrad ≤ 2
und R₃ ein Tosyl- oder Tresylrest mit einem Substitutionsgrad ≤ 1
bedeutet,
umgesetzt wird.

2. Verfahren nach Anspruch 1,
**dadurch gekennzeichnet,**
daß als Diamin ein Phenylendiamin eingesetzt wird.

3. Verfahren nach Anspruch 2,
**dadurch gekennzeichnet,**
daß als Phenylendiamin 1,4-Phenylendiamin eingesetzt wird.

4. Verfahren nach einem der vorhergehenden Ansprüche,
**dadurch gekennzeichnet,**
daß der Substituent R₁ und/oder R₂ ein Alkyl, vorzugsweise CH₃, oder ein Acyl, vorzugsweise Acetyl, oder ein Tosylrest oder ein Tresylrest ist.

5. Verfahren nach einem der vorhergehenden Ansprüche,
**dadurch gekennzeichnet,**
daß für die Umsetzung Dimethylformamid oder Dimethylacetamid, vorzugsweise Dimethylsulfoxid, als Lösungsmittel eingesetzt wird.

6. Verfahren nach einem der vorhergehenden Ansprüche,
**dadurch gekennzeichnet,**
daß die Umsetzung in Gegenwart einer organischen Base durchgeführt wird.

7. Verfahren nach Anspruch 6,
**dadurch gekennzeichnet,**
daß als Base Pyridin oder Triethylamin eingesetzt wird.

8. Verfahren nach Anspruch 7,
**dadurch gekennzeichnet,**
daß 0,15 Gew.-Anteile Triethylamin eingesetzt werden.

9. Verfahren nach einem der vorhergehenden Ansprüche,
**dadurch gekennzeichnet,**
daß die Reaktion bei einer Temperatur von 80°C bis 120°C über eine Zeitdauer von 1 bis 10 Stunden durchgeführt wird.

10. Aromatische Di- oder Triamin-Cellulosederivate der allgemeinen Formel II 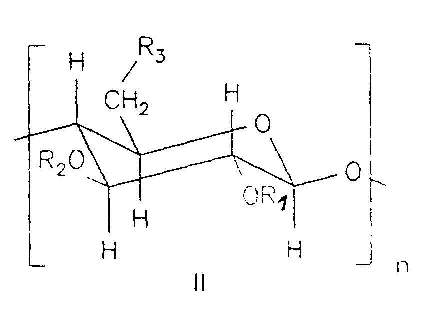 in der R₁, R₂ = H
oder R₁ = H, R₂ = Substituent mit einem Substitutionsgrad ≤ 1
oder R₁ = Substituent mit einem Substitutionsgrad ≤ 1, R₂ = H
oder R₁, R₂ = Substituent mit einem Substitutionsgrad ≤ 2
und R₃ ein aromatischer Aminrest mit einem Substitutionsgrad ≤ 1
bedeutet.

11. Aromatische Di-oder Triamin-Cellulosederivate nach Anspruch 10,
**dadurch gekennzeichnet,**
daß R₃ ein Phenylendiaminrest bedeutet.

12. Aromatische Di- oder Triamin-Cellulosederivate nach Anspruch 11,
**dadurch gekennzeichnet,**
daß R₃ ein 1,4-Phenylendiaminrest der Formel 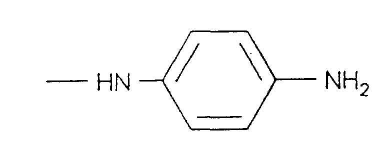 bedeutet.

13. Aromatische Di- oder Triamin-Cellulosederivate nach einem der Ansprüche 10 bis 12,
**dadurch gekennzeichnet,**
daß der Substituent R₁ und/oder R₂ ein Alkyl, vorzugsweise CH₃, oder Acyl, vorzugsweise Acetyl, oder ein Tosylrest oder ein Tresylrest ist.

## Claims

1. Process for preparing aromatic diamino-cellulose or triamino-cellulose derivatives in which an aromatic diamine or triamine is reacted with tosylcellulose or tresylcellulose of the general formula I 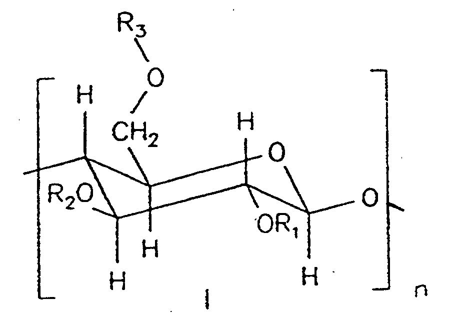 in which R₁, R₂ = H
or R₁ = H, R₂ = substituent with a rate of substitution ≤ 1
or R₁ = substituent with a rate of substitution ≤ 1, R₂ = H
or R₁, R₂ = substituent with a rate of substitution ≤ 2
and R₃ means a tosyle or tresyle residue with a rate of substitution ≤1.

2. Process according to Claim 1, characterised in that a phenylene diamine is used as the diamine.

3. Process according to Claim 2, characterised in that 1,4-phenylene diamine is used as the phenylene diamine.

4. Process according to one of the preceding claims, characterised in that the substituent R₁ and/or R₂ is an alkyl, preferably CH₃, or and acyl. preferably acetyl, or a tosyle residue or a tresyle residue.

5. Process according to one of the preceding claims, characterised in that dimethylic formamide or dimethylic acetamide, preferably dimethylic sulphoxide, is used as the solvent for the reaction.

6. Process according to one of the preceding claims, characterised in that the transformation is carried out in the presence of an organic base.

7. Process according to Claim 6, characterised in that pyridine or triethylamine is used as the base.

8. Process according to Claim 7, characterised in that a weight percentage of 0.15 of triethylamine is used.

9. Process according to one of the preceding claims, characterised in that the reaction is carried out at a temperature of 80°C to 120°C over a period of 1 to 10 hours.

10. Aromatic diamino-cellulose or triamino-cellulose derivative of the general formula II 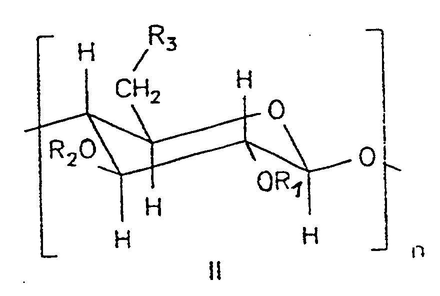 in which R₁, R₂ = H
or R₁ = H, R₂ = substituent with a rate of substitution ≤ 1
or R₁ = substituent with a rate of substitution ≤ 1, R₂ = H
or R₁, R₂ = substituent with a rate of substitution ≤ 2
and R₃ means an aromatic amine residue with a rate of substitution ≤ 1.

11. Aromatic diamino-cellulose or triamino-cellulose derivative according to Claim 10, characterised in that R₃ means a phenylene diamine residue.

12. Aromatic diamino-cellulose or triamino-cellulose derivative according to Claim 11, characterised in that R₃ means a 1,4 phenylene diamine residue of the formula:

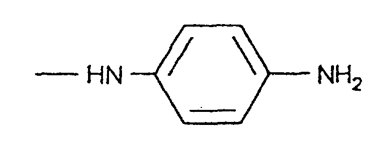

13. Aromatic diamino-cellulose or triamino-cellulose derivative according to one of Claims 10 to 12, characterised in that the substituent R₁ and/or R₂ is an alkyl, preferably CH₃, or an acyl, preferably acetyl, or a tosyle residue or a tresyle residue.

## Revendications

1. Procédé de préparation de dérivés di- ou triaminocellulosiques aromatiques, dans lequel on fait réagir une di- ou triamine aromatique avec de la tosyl- ou trésylcellulose répondant à la formule générale I 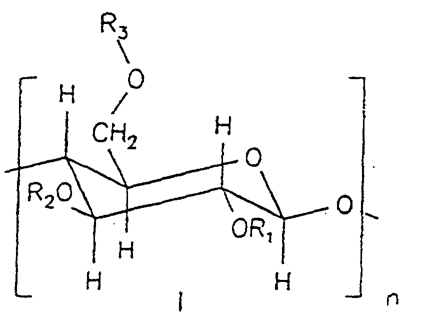 dans laquelle R₁, R₂ = H
ou R₁ = H, R₂ = un substituant avec un degré de substitution ≤ 1
ou R₁ = un substituant avec un degré de substitution ≤ 1, R₂ = H
ou R₁, R₂ = un substituant avec un degré de substitution ≤ 2
et R₃ signifie un radical tosyle ou trésyle ayant un degré de substitution ≤ 1.

2. Procédé selon la revendication 1, caractérisé en ce qu'on utilise une phénylènediamine en tant que diamine.

3. Procédé selon la revendication 2, caractérisé en ce qu'on utilise de la 1,4-phénylènediamine en tant que phénylènediamine.

4. Procédé selon l'une des revendications précédentes, caractérisé en ce que le substituant R₁ et/ou R₂ est un radical alkyle, de préférence CH₃, ou un radical acyle, de préférence acétyle, ou un radical tosyle ou un radical trésyle.

5. Procédé selon l'une des revendications précédentes, caractérisé en ce qu'on utilise du diméthylformamide ou du diméthylacétamide, de préférence du diméthylsulfoxyde, comme solvant pour la réaction.

6. Procédé selon l'une des revendications précédentes, caractérisé en ce qu'on effectue la réaction en présence d'une base organique.

7. Procédé selon la revendication 6, caractérisé en ce qu'on utilise de la pyridine ou de la triéthylamine en tant que base.

8. Procédé selon la revendication 7, caractérisé en ce qu'on utilise 0,15 partie en poids de triéthylamine.

9. Procédé selon l'une des revendications précédentes, caractérisé en ce qu'on effectue la réaction à une température de 80°C à 120°C pendant une durée de 1 à 10 heures.

10. Dérivés di- ou triaminocellulosiques aromatiques répondant à la formule générale II 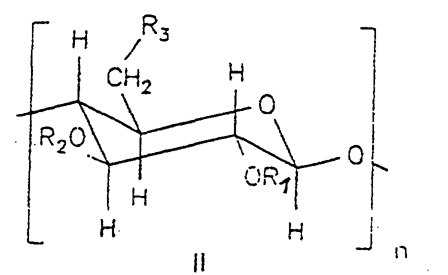 dans laquelle R₁, R₂ = H
ou R₁ = H, R₂ = un substituant avec un degré de substitution ≤ 1
ou R₁ = un substituant avec un degré de substitution < 1, R₂ = H
ou R₁, R₂ = un substituant avec un degré de substitution ≤ 2
et R₃ signifie un radical amino aromatique avec un degré de substitution ≤ 1.
11. Dérivés di- ou triaminocellulosiques aromatiques selon la revendication 10, caractérisés en ce que R₃ signifie un radical phénylènediamine.
12. Dérivés di- ou triaminocellulosiques aromatiques selon la revendication 11, caractérisés en ce que R₃ signifie un radical 1,4-phénylènediamine de formule 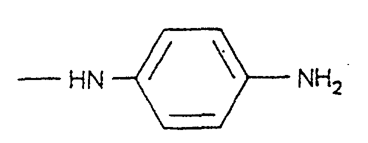
13. Dérivés di- ou, triaminocellulosiques aromatiques selon l'une des revendications 10 à 12, caractérisés en ce que le substituant R₁ et/ou R₂ est un radical alkyle, de préférence CH₃, ou un radical acyle, de préférence acétyle, ou un radical tosyle ou un radical trésyle.
